# EUROPÄISCHE PATENTSCHRIFT

(11) **EP 2 959 764 B1**
(45) Veröffentlichungstag und Bekanntmachung des Hinweises auf die Patenterteilung: **09.08.2023**
(21) Anmeldenummer: 15170515.9
(22) Anmeldetag: 03.06.2015
(51) Int. Cl.: A01D 34/00, A01B 69/04

(54) **AUTONOMES FORTBEWEGUNGSGERÄT**
AUTONOMOUS LOCOMOTION DEVICE
APPAREIL DE LOCOMOTION AUTONOME

(30) Priorität: 27.06.2014 DE 102014212389
(43) Veröffentlichungstag der Anmeldung: 30.12.2015
(73) Patentinhaber: Robert Bosch GmbH, 70442 Stuttgart (DE)
(72) Erfinder: Wallhaeusser, Eva, 70565 Stuttgart (DE); Taylor, Jon, Illington Norfolk, IP24 1RS (GB); Vogelgesang, Michael, 70565 Stuttgart (DE)

(56) Entgegenhaltungen:
- EP-A1- 2 082 638
- EP-A2- 2 425 701
- EP-B1- 2 428 107
- WO-A1-2013/104455
- DE-A1-102007 023 157
- US-A1- 2002 156 556

## Beschreibung

### Stand der Technik

Aus EP 2 428 107 B1 ist bereits ein autonomes Fortbewegungsgerät, insbesondere ein autonomer Rasenmäher, bekannt, das eine Antriebseinheit, eine Energieversorgungseinheit zu einer Energieversorgung der Antriebseinheit und eine Steuer- und/oder Regeleinheit zu einer Steuerung und/oder Regelung der Antriebseinheit umfasst. Die Steuer- und/oder Regeleinheit ist hierbei dazu vorgesehen, einen Arbeitsbereich in Abschnitte zu unterteilen und die Antriebseinheit in Abhängigkeit von Zeitreferenzen, die repräsentativ dafür sind, wann das autonome Fortbewegungsgerät einen Arbeitsprozess in einem der Abschnitte durchgeführt hat, zu steuern und/oder zu regeln. Ferner wird auf die Druckschriften US 2002/156556 A1 und DE 10 2007 023 157 A1, das den Oberbegriff des Anspruchs 1 offenbart, verwiesen.

### Offenbarung der Erfindung

Die Erfindung betrifft ein autonomes Fortbewegungsgerät mit den Merkmalen des Anspruchs 1. Sinnvolle Weiterbildungen ergeben sich aus den abhängigen Ansprüchen 2-14.

Zusätzlich kann die Steuer- und/oder Regeleinheit in zumindest einer Ausgestaltung des autonomen Fortbewegungsgeräts dazu vorgesehen sein, zumindest die Antriebseinheit in Abhängigkeit von zumindest einer Energieaufnahmekenngröße oder einer elektrischen Leistung einer Arbeitsflächenbearbeitungseinheit des autonomen Fortbewegungsgeräts, insbesondere in Abhängigkeit von einer Stromstärke, die die Arbeitsflächenbearbeitungseinheit während eines vorausgehenden Arbeitsprozesses aufgenommen hat, zu einer Einleitung eines autonomen Arbeitsprozesses zu steuern und/oder zu regeln.

Unter einem "autonomen Fortbewegungsgerät" soll hier insbesondere ein Gerät verstanden werden, das sich selbsttätig in einem Bereich und/oder in einer Umgebung fortbewegt, orientiert oder navigiert, insbesondere sich nach einem Anlernprozess selbsttätig in einem Bereich und/oder in einer Umgebung fortbewegt und/oder sich orientiert. Der Ausdruck "selbsttätig fortbewegen und/oder orientieren" soll hier insbesondere eine Fortbewegung, eine Orientierung und/oder Navigation des Fortbewegungsgeräts, insbesondere nach einem Anlernprozess, ohne einen menschlichen Eingriff definieren. Vorzugsweise bewegt sich das autonome Fortbewegungsgerät nach einem von einem Bediener mit dem autonomen Fortbewegungsgerät durchgeführten Anlernprozess selbsttätig in einem Bereich und/oder in einer Umgebung fort bzw. orientiert sich selbsttätig in einem Bereich und/oder in einer Umgebung. Das Fortbewegungsgerät kann hierbei als autonomer Rasenmäher, als autonomes Agrargerät o. dgl. ausgebildet sein. Bevorzugt ist das autonome Fortbewegungsgerät als autonomer Rasenmäher ausgebildet, der dazu vorgesehen ist, eine als Rasenfläche ausgebildete Arbeitsfläche und/oder eine als Gartenumgebung ausgebildete Arbeitsumgebung abzufahren und/oder zu bearbeiten. Hierzu weist das autonome Fortbewegungsgerät besonders bevorzugt eine als Mähwerkeinheit ausgebildete Arbeitsflächenbearbeitungseinheit auf. Die Arbeitsflächenbearbeitungseinheit kann hierbei mittels der Antriebseinheit, die zumindest zu einem Antrieb einer Fahrwerkseinheit des autonomen Fortbewegungsgeräts vorgesehen ist, oder mittels einer separaten Mähwerkantriebseinheit, die getrennt von der Antriebseinheit zum Antrieb der Fahrwerkseinheit ausgebildet ist, angetrieben werden. Unter "vorgesehen" soll insbesondere speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt.

Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Das Betriebsprogramm ist hierbei vorzugsweise dazu vorgesehen, zumindest die Antriebseinheit in Abhängigkeit von zumindest einer Vegetationskenngröße und/oder in Abhängigkeit von zumindest einer vorausgehenden Energieabgabekenngröße zu einer Einleitung eines autonomen Arbeitsprozesses zu steuern und/oder zu regeln. Der Begriff "Vegetationskenngröße" soll hier insbesondere eine Kenngröße definieren, aus der sich auf ein durchschnittliches Wachstum von Pflanzen, insbesondere von Gras, schließen lässt. Die Vegetationskenngröße kann hierbei insbesondere als Tageslichtdauer, als Helligkeit, als Umgebungstemperatur, als Regenmenge, als Luftfeuchtigkeit o. dgl. ausgebildet sein. Die Steuer- und/oder Regeleinheit umfasst zumindest eine in der Speichereinheit hinterlegte Vegetationsdatenbank, mittels derer in Abhängigkeit von zumindest einer erfassten Vegetationskenngröße auf ein durchschnittliches Wachstum von auf einer Arbeitsfläche befindlichen Pflanzen schließbar ist. Alternativ oder zusätzlich umfasst das Betriebsprogramm der Steuer- und/oder Regeleinheit zumindest einen Algorithmus, mittels dessen ein durchschnittliches Wachstum von auf einer Arbeitsfläche befindlichen Pflanzen in Abhängigkeit von zumindest einer erfassten Vegetationskenngröße errechenbar ist.

Der Begriff "Energieabgabekenngröße" soll hier insbesondere eine Kenngröße definieren, die von der Energieversorgungseinheit während eines Betriebs des autonomen Fortbewegungsgeräts abgegeben wird. Die Energieabgabekenngrö-ße kann hierbei als elektrische Stromstärke, als elektrische Leistung o. dgl. ausgebildet sein. Besonders bevorzugt ist die Energieabgabekenngröße als abgegebene Stromstärke der Energieversorgungseinheit ausgebildet. Unter einer "vorausgehenden Energieabgabekenngröße" soll hier insbesondere eine Energieabgabekenngröße verstanden werden, die in einem im Vergleich zu einem aktuell durchzuführenden Arbeitsprozess zeitlich vorausgehenden Arbeitsprozess von der Energieversorgungseinheit abgegeben wurde. Die vorausgehende Energieabgabekenngröße ist insbesondere abhängig von einer vorausgehenden Mähleistung der Arbeitsflächenbearbeitungseinheit. Es ist jedoch auch denkbar, dass die vorausgehende Energieabgabekenngröße von anderen, einem Fachmann als sinnvoll erscheinenden Ereignissen abhängig ist, wie beispielsweise von einer zurückgelegten Strecke, die das autonome Fortbewegungsgerät infolge eines Antriebs der Fahrwerkseinheit mittels der Antriebseinheit zurückgelegt hat, o. dgl. Die Energieversorgungseinheit ist besonders bevorzugt als Akkumulatoreinheit ausgebildet. Es ist jedoch auch denkbar, dass die Energieversorgungseinheit eine andere, einem Fachmann als sinnvoll erscheinende Ausgestaltung aufweist, wie beispielsweise eine Ausgestaltung als kabelgebundene Netzteileinheit, als Brennstoffzelle o. dgl. Die Steuer- und/oder Regeleinheit ist hierbei besonders bevorzugt dazu vorgesehen, zumindest die Antriebseinheit zumindest zusätzlich zu einer Einleitung eines reinen Ladeprozess bei Erkennen einer leeren Energieversorgungseinheit in Abhängigkeit von zumindest einer Vegetationskenngröße und/oder in Abhängigkeit von zumindest einer vorausgehenden Energieabgabekenngröße der Energieversorgungseinheit zu einer Einleitung eines autonomen Arbeitsprozesses, insbesondere zu einer Einleitung eines Mähprozesses, zu steuern und/oder zu regeln. Somit ist der Arbeitsprozess, der in Abhängigkeit von zumindest einer Vegetationskenngröße und/oder in Abhängigkeit von zumindest einer vorausgehenden Energieabgabekenngröße einleitbar ist, besonders bevorzugt verschieden von einem als reinen Ladeprozess ausgebildeten Arbeitsprozess.

Mittels der erfindungsgemäßen Ausgestaltung des autonomen Fortbewegungsgeräts kann vorteilhaft eine bedarfsorientierte Steuerung und/oder Regelung der Antriebseinheit zu einer Einleitung eines Arbeitsprozesses, insbesondere eines Mähprozesses, ermöglicht werden. Somit kann vorteilhaft eine Anzahl von Arbeitszyklen in Abhängigkeit einer tatsächlichen Notwendigkeit einer Durchführung eines Arbeitsprozesses, insbesondere eines Mähprozesses, ermöglicht werden. Es kann vorteilhaft ein Energiebedarf gering gehalten werden. Zudem kann eine vorteilhaft lange Lebensdauer von Verschleißteilen, wie beispielsweise von einer Akkumulatoreinheit, von einer Antriebseinheit, von einer Arbeitsflächenbearbeitungseinheit, insbesondere von zumindest einem Schneidelement der Arbeitsflächenbearbeitungseinheit, o. dgl., erreicht werden.

Des Weiteren wird vorgeschlagen, dass das autonome Fortbewegungsgerät zumindest eine Kommunikationseinheit umfasst, die dazu vorgesehen ist, zu einer Übertragung von elektronischen Daten zumindest von der und/oder zumindest auf die Steuer- und/oder Regeleinheit mit zumindest einer als Vegetationssensoreinheit, als Basisstation oder als weiteres autonomes Fortbewegungsgerät, insbesondere als weiterer autonomer Rasenmäher, ausgebildeten externen Einheit zu kommunizieren. Die Kommunikationseinheit ist vorzugsweise als kabellose Kommunikationseinheit ausgebildet. Hierbei kann die Kommunikationseinheit als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit o. dgl. ausgebildet sein. Besonders bevorzugt ist die Kommunikationseinheit zu einer bidirektionalen Datenübertragung vorgesehen. In einer alternativen Ausgestaltung ist die Kommunikationseinheit als kabelgebundene Kommunikationseinheit ausgebildet, wie beispielsweise als LAN-Kommunikationseinheit, als USB-Kommunikationseinheit, als Einfassungsdrahtkommunikationseinheit o. dgl. Besonders bevorzugt sind mittels der Kommunikationseinheit elektronische Daten übertragbar, die eine Aussage über ein Wachstum von Pflanzen oder eine Kommunikation von mehreren autonomen Fortbewegungsgeräten untereinander ermöglichen. Somit sind elektronische Daten, die mittels der Kommunikationseinheit übertragbar sind, vorzugsweise verschieden von elektronischen Daten, die zu einer Ortung und/oder Annäherung des autonomen Fortbewegungsgeräts an eine als Basisstation ausgebildete externe Einheit vorgesehen sind. Mittels der erfindungsgemäßen Ausgestaltung kann vorteilhaft ein Datenaustausch zwischen dem autonomen Fortbewegungsgerät und einer externen Einheit realisiert werden, der zu einer Speicherung von Daten, zu einer Bearbeitung von Daten o. dgl. im Hinblick auf eine zumindest im Wesentlichen selbstständige Durchführung eines Arbeitsprozesses, insbesondere eines Mähprozesses, nutzbar ist. Zudem kann vorteilhaft eine Vernetzung, insbesondere eine Schwarmintelligenz, von mehreren autonomen Fortbewegungsgeräten zu einer Durchführung eines Arbeitsprozesses, insbesondere eines Mähprozesses, ermöglicht werden.

Ferner wird vorgeschlagen, dass das autonome Fortbewegungsgerät zumindest eine Vegetationssensoreinheit zu einer Erfassung der zumindest einen Vegetationskenngröße aufweist. Bevorzugt umfasst die Vegetationssensoreinheit zu einer Erfassung von zumindest einer Vegetationskenngröße zumindest ein Vegetationssensorelement. Es ist jedoch auch denkbar, dass die Vegetationssensoreinheit eine von eins abweichende Vielzahl an Vegetationssensorelementen zu einer Erfassung von verschiedenen Vegetationskenngrößen umfasst. Das Vegetationssensorelement kann hierbei als Tageslichtdauersensorelement, als Helligkeitssensorelement, als Temperatursensorelement, als Regensensorelement, insbesondere als Regenmengensensorelement, als Luftfeuchtigkeitssensorelement, insbesondere als Hygrometer, o. dgl. ausgebildet sein. Zudem ist es denkbar, dass das autonome Fortbewegungsgerät zusätzlich oder alternativ zu der in das autonome Fortbewegungsgerät integrierte Vegetationssensoreinheit zu einer Erfassung von zumindest einer Vegetationskenngröße mittels der Kommunikationseinheit mit einer als Vegetationssensoreinheit ausgebildeten externen Einheit kommuniziert. Hierbei ist es denkbar, dass die als Vegetationssensoreinheit ausgebildete externe Einheit in die Basisstation integriert ist oder separat zur Basisstation ausgebildet ist. Des Weiteren umfasst das autonome Fortbewegungsgerät vorzugsweise alternativ oder zusätzlich zur Vegetationssensoreinheit zumindest eine Energieabgabesensoreinheit zu einer Erfassung von zumindest einer Energieabgabekenngröße der Energieversorgungseinheit. Bevorzugt ist die Energieabgabesensoreinheit als Stromsensoreinheit zu einer Erfassung einer elektrischen Stromstärke ausgebildet. Es ist jedoch auch denkbar, dass die Energieabgabesensoreinheit eine andere, einem Fachmann als sinnvoll erscheinende Ausgestaltung aufweist. Mittels der erfindungsgemäßen Ausgestaltung kann vorteilhaft eine Erfassung von Vegetationskenngrößen direkt am autonomen Fortbewegungsgerät ermöglicht werden. Somit kann vorteilhaft während einer Fortbewegung des autonomen Fortbewegungsgeräts eine Erfassung von Vegetationskenngrößen zu einer Steuerung und/oder Regelung zumindest der Antriebseinheit berücksichtigt werden.

Zudem wird vorgeschlagen, dass das autonome Fortbewegungsgerät zumindest eine manuelle Eingabeeinheit zu einer manuellen Eingabe von zumindest einer Kenngröße aufweist, wobei die Steuer- und/oder Regeleinheit dazu vorgesehen ist, die zumindest eine manuelle eingegebene Kenngröße bei einer Steuerung und/oder Regelung der Antriebseinheit in Abhängigkeit von der zumindest einen Vegetationskenngröße und/oder von der zumindest einen vorausgehenden Energieabgabekenngröße zu berücksichtigen. Die manuelle Eingabeeinheit kann hierbei als berührungsempfindliches Display, als Tastenfeld, als Wählschalter o. dgl. ausgebildet sein. Die manuelle Kenngröße, die mittels der manuellen Eingabeeinheit eingebbar ist, kann beispielsweise als Datum, als Uhrzeit, als Arbeitsprozesshäufigkeit, insbesondere als Mähhäufigkeit, als Arbeitsprozessintervallvorgabe, insbesondere als Mähintervallvorgabe, o. dgl. ausgebildet sein. Somit kann vorzugsweise mittels der manuellen Eingabeeinheit beispielsweise eingegeben werden, ob ein häufiges Durchführen eines Arbeitsprozesses, insbesondere eines Mähprozesses, oder ein seltenes Durchführen eines Arbeitsprozesses, insbesondere eines Mähprozesses, erfolgen soll. Die Steuer- und/oder Regeleinheit gewichtet hierbei die manuelle eingegebene Kenngröße zu einer Berücksichtigung bei einer Steuerung und/oder Regelung zumindest der Antriebseinheit in Abhängigkeit von der zumindest einen Vegetationskenngröße und/oder von der zumindest einen vorausgehenden Energieabgabekenngröße. Die Gewichtung kann hierbei manuell eingestellt oder infolge eines Arbeitsprozessverhaltens des autonomen Fortbewegungsgeräts zumindest teilautomatisch vorgenommen werden und/oder nachgeregelt werden. Mittels der erfindungsgemäßen Ausgestaltung kann vorteilhaft ein Bedienerwunsch bei einer zumindest im Wesentlichen automatischen Steuerung und/oder Regelung des autonomen Fortbewegungsgeräts ermöglicht werden.

Des Weiteren wird vorgeschlagen, dass die Steuer- und/oder Regeleinheit dazu vorgesehen ist, Ruhezeiten zumindest teilautomatisch in Abhängigkeit von der zumindest einen Vegetationskenngröße und/oder von der zumindest einen vorausgehenden Energieabgabekenngröße zu bestimmen. Unter "Ruhezeiten" sollen hier insbesondere Zeiten verstanden werden, in denen das autonome Fortbewegungsgerät ruht (stillsteht) und/oder sich in einer Basisstation befindet, insbesondere zu einer Ladung der Energieversorgungseinheit. Vorzugsweise sind Ruhezeiten alternativ oder zusätzlich mittels der manuellen Eingabeeinheit eingebbar, um einen von einem Bediener unerwünschten Arbeitsprozess zu vermeiden. Mittels der erfindungsgemäßen Ausgestaltung des autonomen Fortbewegungsgeräts kann vorteilhaft eine intelligente Zeitsteuerung ermöglicht werden. Somit kann vorteilhaft eine bedienerfreundliche zumindest im Wesentlichen vollautomatische Steuerung und/oder Regelung des autonomen Fortbewegungsgeräts ermöglicht werden.

Vorteilhafterweise ist die Steuer- und/oder Regeleinheit dazu vorgesehen, Ruhezeiten zumindest teilautomatisch in Abhängigkeit von zumindest einer in einer Speichereinheit der Steuer- und/oder Regeleinheit hinterlegbaren Kalenderkenngröße zu bestimmen. Besonders bevorzugt sind somit zumindest teilautomatisch Feiertage und/oder Wochenenden zu einer Bestimmung von Ruhezeiten heranziehbar. Die Kalenderkenngröße ist hierbei vorzugsweise manuell hinterlegbar oder zumindest teilweise automatisch hinterlegbar, wie beispielsweise infolge eines Downloads aus einem Datennetzwerk. Hierbei ist es denkbar, dass von einem Bediener ein neuer Kalender auf die Speichereinheit aufspielbar ist oder dass in vorbestimmbaren Zeitintervallen ein automatisches Update eines Kalenders erfolgt. Vorzugsweise ist die Kalenderkenngröße als Jahreskalender ausgebildet. Somit kann besonders vorteilhaft ein Ruhezeit des autonomen des Fortbewegungsgeräts auf einen Feiertag und/oder auf ein Wochenende gelegt werden. Somit kann vorteilhaft eine geringe Belästigung durch eine Bearbeitung eines Arbeitsbereichs mittels des autonomen Fortbewegungsgeräts erreicht werden.

Ferner wird vorgeschlagen, dass die Steuer- und/oder Regeleinheit dazu vorgesehen ist, Arbeitsprozessintervalle zumindest teilautomatisch in Abhängigkeit von der zumindest einen Vegetationskenngröße und/oder von der zumindest einen vorausgehenden Energieabgabekenngröße zu bestimmen. Hierbei ist die Steuer- und/oder Regeleinheit vorzugsweise dazu vorgesehen, zumindest teilautomatisch einen Arbeitsplan zu erstellen, anhand dessen eine Durchführung von Arbeitsprozessen und eine Einhaltung von Ruhezeiten erfolgt. Mittels der erfindungsgemäßen Ausgestaltung kann vorteilhaft eine bedarfsgerechte Durchführung von Arbeitsprozessen ermöglicht werden.

Zudem wird vorgeschlagen, dass das autonome Fortbewegungsgerät zumindest die Arbeitsflächenbearbeitungseinheit umfasst, die mittels der Steuer- und/oder Regeleinheit in Abhängigkeit von der zumindest einen Vegetationskenngröße und/oder von der zumindest einen vorausgehenden Energieabgabekenngröße steuer- und/oder regelbar ist. Besonders bevorzugt ist die Arbeitsflächenbearbeitungseinheit als Mähwerkeinheit ausgebildet. Hierbei weist die Mähwerkeinheit insbesondere eine, einem Fachmann bereits bekannte Ausgestaltung auf. Somit umfasst die Mähwerkeinheit vorzugsweise zumindest ein Schneidelement, zumindest eine Mähwerkantriebseinheit und/oder zumindest eine Mähgutsammeleinheit. Mittels der erfindungsgemäßen Ausgestaltung kann vorteilhaft eine bedarfsgerechte Durchführung eines als Mähprozess ausgebildeten Arbeitsprozesses ermöglicht werden.

Des Weiteren wird vorgeschlagen, dass das autonome Fortbewegungsgerät zumindest eine Standortortungseinheit aufweist, wobei die Steuer- und/oder Regeleinheit dazu vorgesehen ist, zusätzlich zu der zumindest einen Vegetationskenngröße und/oder der zumindest einen vorausgehenden Energieabgabekenngröße, eine mittels der Standortortungseinheit erfasste Standortortungskenngrö-ße zu einer Steuerung und/oder Regelung der Antriebseinheit auszuwerten. Der Ausdruck "Standortortungseinheit" soll hier insbesondere eine Einheit definieren, die dazu vorgesehen ist, einen Standort, insbesondere einen globalen Standort, des autonomen Fortbewegungsgeräts infolge einer Erfassung von zumindest einer Kenngröße zu ermitteln. Besonders bevorzugt ist die Standortortungseinheit als Satellitennavigationsortungseinheit, insbesondere als GPS-Empfänger oder als Galileo-Empfänger, ausgebildet. Es ist jedoch auch denkbar, dass die Standortortungseinheit als Magnetkompass, als Odometrieeinheit und/oder als Polarisationsfilterkompass o. dgl. ausgebildet ist. Mittels der erfindungsgemäßen Ausgestaltung kann vorteilhaft ein Standort des autonomen Fortbewegungsgeräts zu einer Durchführung eines Arbeitsprozesses genutzt werden.

Ferner wird ein Verfahren zu einer selbsttätigen Steuerung und/oder Regelung des erfindungsgemäßen autonomen Fortbewegungsgeräts, insbesondere des autonomen Rasenmähers, vorgeschlagen, wobei zu einer Einleitung eines Arbeitsprozesses des autonomen Fortbewegungsgeräts zumindest eine Vegetationskenngröße berücksichtigt wird, mit welcher auf ein durchschnittliches Wachstum von Pflanzen, insbesondere von Gras, geschlossen wird. Somit kann vorteilhaft eine bedarfsorientierte Steuerung und/oder Regelung des autonomen Fortbewegungsgeräts zu einer Einleitung eines Arbeitsprozesses, insbesondere eines Mähprozesses, ermöglicht werden. Somit kann vorteilhaft eine Anzahl von Arbeitszyklen in Abhängigkeit einer tatsächlichen Notwendigkeit einer Durchführung eines Arbeitsprozesses, insbesondere eines Mähprozesses, ermöglicht werden. Es kann vorteilhaft ein Energiebedarf gering gehalten werden. Zudem kann eine vorteilhaft lange Lebensdauer von Verschleißteilen, wie beispielsweise von einer Akkumulatoreinheit, von einer Antriebseinheit, von einer Arbeitsflächenbearbeitungseinheit, insbesondere von Schneidelementen der Arbeitsflächenbearbeitungseinheit, o. dgl., erreicht werden.

Zudem wird vorgeschlagen, dass bei dem erfindungsgemäßen Verfahren ein Arbeitsplan des autonomen Fortbewegungsgeräts zumindest teilautomatisch in Abhängigkeit von der zumindest einen Vegetationskenngröße und/oder von der zumindest einen bei einem vorausgehenden Arbeitsprozess erfassten Energieabgabekenngröße erstellt wird. Somit kann besonders vorteilhaft eine energieeffiziente Steuerung und/oder Regelung des autonomen Fortbewegungsgeräts ermöglicht werden.

Des Weiteren wird vorgeschlagen, dass bei dem erfindungsgemäßen Verfahren zumindest das autonome Fortbewegungsgerät zu einer dynamischen Einteilung eines Arbeitsbereichs während des Arbeitsprozesses mittels der Kommunikationseinheit mit zumindest einem weiteren autonomen Fortbewegungsgerät kommuniziert. Beispielsweise ist hierbei denkbar, dass bei einer Fertigstellung eines Arbeitsprozesses durch das autonome Fortbewegungsgerät eine Kommunikation zwischen dem autonomen Fortbewegungsgerät und dem weiteren autonomen Fortbewegungsgerät stattfindet, um das weitere autonome Fortbewegungsgerät bei einer Fertigstellung eines Arbeitsprozesses des weiteren Fortbewegungsgeräts zu unterstützen. Alternativ oder zusätzlich ist es denkbar, dass eine Kommunikation des autonomen Fortbewegungsgeräts und des weiteren Fortbewegungsgeräts über die Basisstation erfolgt. Somit ist die Basisstation vorzugsweise in einer Ausgestaltung als zentrale Informationsquelle vorgesehen. Sollte beispielsweise das autonome Fortbewegungsgerät einen Arbeitsprozess beendet haben, bewegt es sich zur Basisstation und erhält dort neue Arbeitsanweisungen.

Zudem ist es denkbar, dass jedes autonome Fortbewegungsgerät eine eigene Basisstation nutzt und die verschiedenen Basisstationen untereinander kommunizieren. Die Basisstationen können hierbei kabellos und/oder kabelgebunden kommunizieren. Somit kann vorteilhaft eine bedarfsgerechte Aufteilung von Arbeitsbereichen erfolgen und vorteilhaft ein Schwarmverhalten zu einer Bearbeitung der Arbeitsbereiche genutzt werden.

Vorteilhafterweise wird vorgeschlagen, dass bei dem erfindungsgemäßen Verfahren zumindest das autonome Fortbewegungsgerät zu einer Kartographierung eines Arbeitsbereichs während des Arbeitsprozesses mittels einer Kommunikationseinheit mit zumindest einem weiteren autonomen Fortbewegungsgerät kommuniziert. Hierbei ist es denkbar, dass die Kartographierung anhand von einem Abfahren des gesamten Arbeitsbereichs von den einzelnen autonomen Fortbewegungsgeräten ermöglichbar ist oder dass eine Aufteilung des Arbeitsbereichs in Teilbereiche nutzbar ist, wobei jedem Teilbereich ein einzelnes autonomes Fortbewegungsgerät zuordenbar ist, das somit eine Kartographierung des Teilbereichs ermöglicht, wobei die einzelnen Kartographierungen der Teilbereiche zu einer Gesamtkartographierung des Arbeitsbereichs zusammensetzbar sind. Somit kann vorteilhaft eine zeitlich schnelle Erfassung des gesamten Arbeitsbereichs erfolgen. Zudem kann vorteilhaft ein Abgleich von erfassten Daten erfolgen, wodurch vorteilhaft eine genaue Kartographierung des Arbeitsbereichs erreichbar ist.

Ferner wird ein Fortbewegungsgerätesystem mit zumindest einem erfindungsgemäßen autonomen Fortbewegungsgerät und mit zumindest einer als Basisstation ausgebildeten externen Einheit vorgeschlagen. Hierdurch kann vorteilhaft ein bedienerfreundliches Fortbewegungsgerätesystem realisiert werden, das mit einer vorteilhaft geringen Anzahl an Eingriffen eines Bedieners selbsttätige Arbeitsprozesse durchführen kann.

Das erfindungsgemäße autonome Fortbewegungsgerät und/oder das erfindungsgemäße Verfahren sollen/soll hierbei nicht auf die oben beschriebene Anwendung und Ausführungsform beschränkt sein. Insbesondere können/kann das erfindungsgemäße autonome Fortbewegungsgerät und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes autonomes Fortbewegungsgerät, insbesondere ein autonomer Rasenmäher, in einer schematischen Darstellung,
- Fig. 2: ein innerhalb eines Arbeitsbereichs angeordnetes erfindungsgemäßes Fortbewegungsgerätesystem mit zumindest zwei erfindungsgemäßen autonomen Fortbewegungsgeräten und zumindest einer zentralen Basisstation in einer schematischen Darstellung und
- Fig. 3: eine Detailansicht einer alternativen erfindungsgemäßen Navigations- und/oder Orientierungsvorrichtung, bei der ausgesandte elektromagnetische Strahlungen und empfangbare elektromagnetische Strahlungen in einem gemeinsamen Strahlengang leitbar sind, in einer schematischen Darstellung.

### Beschreibung des Ausführungsbeispiels

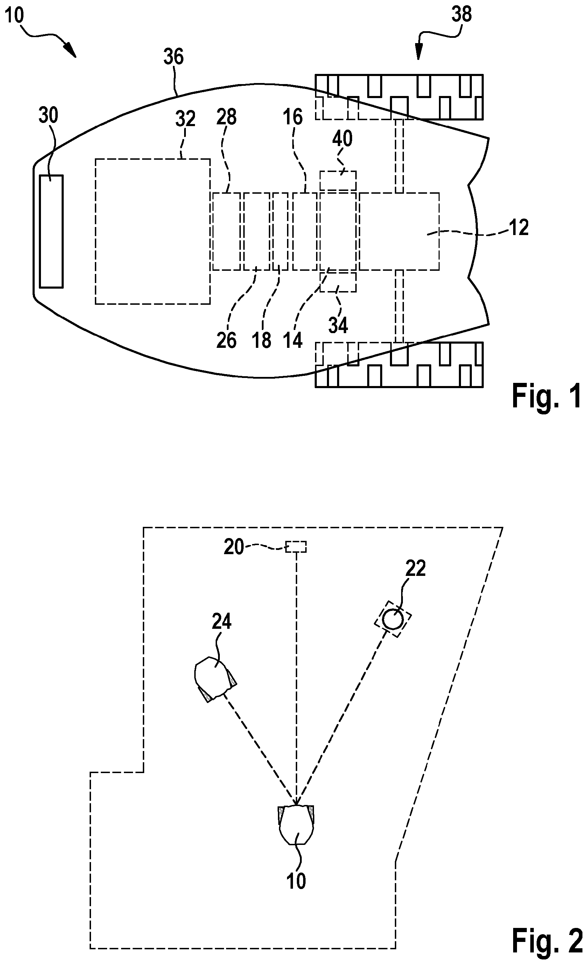

Figur 1 zeigt ein autonomes Fortbewegungsgerät 10, das zumindest eine Antriebseinheit 12, zumindest eine Energieversorgungseinheit 14 zumindest zu einer Energieversorgung der Antriebseinheit 12 und zumindest eine Steuer- und/oder Regeleinheit 16 zumindest zu einer Steuerung und/oder Regelung der Antriebseinheit 12 umfasst. Die Antriebseinheit 12 ist hierbei als Elektromotoreinheit ausgebildet. Es ist jedoch auch denkbar, dass die Antriebseinheit 12 eine andere, einem Fachmann als sinnvoll erscheinende Ausgestaltung aufweist, wie beispielsweise eine Ausgestaltung als Brennkraftmotoreinheit, als Hybridmotoreinheit o. dgl. Die Energieversorgungseinheit 14 ist zusätzlich zu einer Energieversorgung der Antriebseinheit 12 zu einer Energieversorgung von weiteren Komponenten des autonomen Fortbewegungsgeräts 10 vorgesehen. Die Energieversorgungseinheit 14 ist hierbei als Akkumulatoreinheit ausgebildet. Es ist jedoch auch denkbar, dass die Energieversorgungseinheit 14 eine andere, einem Fachmann als sinnvoll erscheinende Ausgestaltung aufweist, wie beispielsweise eine Ausgestaltung als kabelgebundene Netzteileinheit, als Brennstoffzelle, als Kraftstoffvorratseinheit o. dgl. Das autonome Fortbewegungsgerät 10 umfasst ferner zumindest eine Gehäuseeinheit 36, die zumindest die Antriebseinheit 12, die Energieversorgungseinheit 14 und die Steuer- und/oder Regeleinheit 16 zumindest teilweise umschließt. Zudem umfasst das autonome Fortbewegungsgerät 10 zumindest eine Fahrwerkseinheit 38. Die Fahrwerkseinheit 38 weist eine, einem Fachmann bereits bekannte Ausgestaltung auf. Somit kann die Fahrwerkseinheit 38 lenkbare und/oder nicht lenkbare Räder umfassen, die antreibbar oder antriebslos ausgebildet sind. Die Fahrwerkseinheit 38, insbesondere zumindest ein Antriebsrad der Fahrwerkseinheit 38, ist mittels der Antriebseinheit 12 auf eine, einem Fachmann bereits bekannte Art und Weise antreibbar. Des Weiteren umfasst das autonome Fortbewegungsgerät 10 zumindest eine Standortortungseinheit 34, welche zu einer Positionsbestimmung des autonomen Fortbewegungsgeräts 10 innerhalb eines Arbeitsbereichs, insbesondere auf einer Arbeitsfläche, vorgesehen ist. Die Standortortungseinheit 34 ist an oder in der Gehäuseeinheit 36 angeordnet. Hierbei ist die Standortortungseinheit 34 als GPS-Einheit ausgebildet. Es ist jedoch auch denkbar, dass die Standortortungseinheit 34 eine andere, einem Fachmann als sinnvoll erscheinende Ausgestaltung aufweist.

Das autonome Fortbewegungsgerät 10 ist als autonomer Rasenmäher ausgebildet, der dazu vorgesehen ist, sich, insbesondere nach einem Anlernprozess, selbstständig innerhalb eines Arbeitsbereichs bzw. einer Arbeitsumgebung fortzubewegen und eine in dem Arbeitsbereich bzw. der Arbeitsumgebung angeordnete Arbeitsfläche, insbesondere eine Grasfläche, selbsttätig zu bearbeiten. Es ist jedoch auch denkbar, dass das autonome Fortbewegungsgerät 10 eine andere, einem Fachmann als sinnvoll erscheinende Ausgestaltung aufweist, wie beispielsweise eine Ausgestaltung als autonomer Staubsauger, als autonomes Transportgerät, als autonomes Agrargerät zu einer Bearbeitung von landwirtschaftlichen Flächen, als autonomes Fluggerät o. dgl. Zu einer Bearbeitung der Arbeitsfläche weist das autonome Fortbewegungsgerät 10 eine als Mähwerkeinheit ausgebildete Arbeitsflächenbearbeitungseinheit 32 auf. Die Arbeitsflächenbearbeitungseinheit 32 weist eine, einem Fachmann bereits bekannte Ausgestaltung auf. Hierbei kann die als Mähwerkeinheit ausgebildete Arbeitsflächenbearbeitungseinheit 32 zumindest ein Schneidelement, zumindest eine Mähwerkantriebseinheit und/oder zumindest eine Mähgutsammeleinheit aufweisen. In einer besonders vorteilhaften Ausgestaltung des autonomen Fortbewegungsgeräts 10 ist die als Mähwerkeinheit ausgebildete Arbeitsflächenbearbeitungseinheit 32 mittels der Antriebseinheit 12 antreibbar. Ein Antrieb der als Mähwerkeinheit ausgebildeten Arbeitsflächenbearbeitungseinheit 32 mittels der Antriebseinheit 12 ist bedarfsweise zu- oder abschaltbar. Somit ist die Antriebseinheit 12 in einem Betriebsmodus des autonomen Fortbewegungsgeräts 10 dazu vorgesehen, lediglich die Fahrwerkseinheit 38 zu einer Fortbewegung des autonomen Fortbewegungsgeräts 10 anzutreiben. In zumindest einem weiteren Betriebsmodus des autonomen Fortbewegungsgeräts 10 ist die Antriebseinheit 12 hingegen dazu vorgesehen, die Fahrwerkseinheit 38 und die als Mähwerkeinheit ausgebildete Arbeitsflächenbearbeitungseinheit 32 zumindest anzutreiben. Weitere, einem Fachmann als sinnvoll erscheinende Betriebsmodi zu einem Antrieb der Fahrwerkseinheit 38 und/oder der als Mähwerkeinheit ausgebildeten Arbeitsflächenbearbeitungseinheit 32 mittels der Antriebseinheit 12 sind ebenfalls denkbar.

Zu einer Navigation und/oder einer Orientierung des autonomen Fortbewegungsgeräts 10 auf der zu bearbeitenden Arbeitsfläche umfasst das autonome Fortbewegungsgerät 10 zumindest eine Navigations- und/oder Orientierungsvorrichtung 26. Die Navigations- und/oder Orientierungsvorrichtung 26 des autonomen Fortbewegungsgeräts 10 weist hierbei insbesondere eine, einem Fachmann bereits bekannte Ausgestaltung auf, wie beispielsweise eine Ausgestaltung als schallgestützte Navigations- und/oder Orientierungsvorrichtung, als optikgestützte Navigations- und/oder Orientierungsvorrichtung o. dgl. Das autonome Fortbewegungsgerät 10 ist dazu vorgesehen, sich mittels der Navigations- und/oder Orientierungsvorrichtung 26 in einem Arbeitsbereich bzw. in einer Arbeitsumgebung, insbesondere nach einem Anlernprozess, zu einer Durchführung eines Arbeitsprozesses, insbesondere eines Mähprozesses, selbsttätig zu orientieren und/oder navigieren. Der Arbeitsbereich bzw. die Arbeitsumgebung ist hierbei als Gartenbereich bzw. als Gartenumgebung ausgebildet.

Die Steuer- und/oder Regeleinheit 16 ist zumindest dazu vorgesehen, zumindest die Antriebseinheit 12 in Abhängigkeit von zumindest einer Vegetationskenngrö-ße und/oder in Abhängigkeit von zumindest einer vorausgehenden Energieabgabekenngröße der Energieversorgungseinheit 14 zu einer Einleitung eines autonomen Arbeitsprozesses zu steuern und/oder zu regeln. Hierbei ist es denkbar, dass die Steuer- und/oder Regeleinheit 16 in zumindest einer Ausgestaltung des autonomen Fortbewegungsgeräts 10 dazu vorgesehen ist, anhand von einer Gewichtung der Vegetationskenngröße und der Energieabgabekenngröße oder infolge einer Vorgabe eines Bedieners zumindest die Antriebseinheit 12 lediglich in Abhängigkeit von zumindest einer Vegetationskenngröße oder lediglich in Abhängigkeit von zumindest einer vorausgehenden Energieabgabekenngröße der Energieversorgungseinheit 14 zu einer Einleitung eines autonomen Arbeitsprozesses zu steuern und/oder zu regeln. Es ist jedoch auch denkbar, dass die Steuer- und/oder Regeleinheit 16 stets eine Steuerung und/oder Regelung der Antriebseinheit 12 zu einer Einleitung eines autonomen Arbeitsprozesses in Abhängigkeit von der Vegetationskenngröße und von der Energieabgabekenngröße durchführt. Zudem ist es denkbar, dass in zumindest einer Ausgestaltung des autonomen Fortbewegungsgeräts 10 die Steuer- und/oder Regeleinheit 16 lediglich dazu vorgesehen ist, die Antriebseinheit 12 in Abhängigkeit von zumindest einer Vegetationskenngröße oder von zumindest einer vorausgehenden Energieabgabekenngröße zu steuern und/oder zu regeln, da lediglich eine der Kenngrö-ßen erfassbar und/oder auswertbar ist. Ferner ist die Arbeitsflächenbearbeitungseinheit 32 mittels der Steuer- und/oder Regeleinheit 16 in Abhängigkeit von der zumindest einen Vegetationskenngröße und/oder von der zumindest einen vorausgehenden Energieabgabekenngröße steuer- und/oder regelbar, insbesondere zu- oder abschaltbar. Bei einer alternativen, hier nicht näher dargestellten Ausgestaltung des autonomen Fortbewegungsgeräts 10 ist die Arbeitsflächenbearbeitungseinheit 32 mit einer separat zur Antriebseinheit 12 ausgebildeten Mähwerkantriebseinheit antreibbar und die Mähwerkantriebseinheit ist mittels der Steuer- und/oder Regeleinheit 16 in Abhängigkeit von der zumindest einen Vegetationskenngröße und/oder von der zumindest einen vorausgehenden Energieabgabekenngröße steuer- und/oder regelbar. In der bevorzugten Ausgestaltung des autonomen Fortbewegungsgeräts 10 ist jedoch die Arbeitsflächenbearbeitungseinheit 32 mittels der Antriebseinheit 12 antreibbar. Somit erfolgt eine Zu- oder Abschaltung, eine Schnitthöheneinstellung, eine Schneidgeschwindigkeit o. dgl. der Arbeitsflächenbearbeitungseinheit 32 mittels der Steuer- und/oder Regeleinheit 16 in Abhängigkeit von der zumindest einen Vegetationskenngröße und/oder von der zumindest einen vorausgehenden Energieabgabekenngröße. Somit wird bei einem Verfahren zu einer selbsttätigen Steuerung und/oder Regelung des autonomen Fortbewegungsgeräts 10, insbesondere des autonomen Rasenmähers, zu einer Einleitung eines Arbeitsprozesses des autonomen Fortbewegungsgeräts 10 zumindest eine Vegetationskenngröße und/oder eine bei einem vorausgehenden Arbeitsprozess erfasste Energieabgabekenngröße berücksichtigt.

Bei einer Steuerung und/oder Regelung der Antriebseinheit 12 zu einer Einleitung eines autonomen Arbeitsprozesses in Abhängigkeit von der zumindest einen Vegetationskenngröße wird von der Steuer- und/oder Regeleinheit 16 zumindest eine mittels einer Vegetationssensoreinheit 20, 28 erfasste Vegetationskenngröße zu einer Steuerung und/oder Regelung der Antriebseinheit 12 zu einer Einleitung eines autonomen Arbeitsprozesses herangezogen. Die erfasste Vegetationskenngröße kann hierbei als Tageslichtdauer, als Helligkeit, als Umgebungstemperatur, als Regenmenge, als Luftfeuchtigkeit o. dgl. ausgebildet sein, mittels derer auf ein Wachstum von Pflanzen, insbesondere von Gras, schließbar ist. Schließt die Steuer- und/oder Regeleinheit 16 nach einer Auswertung der zumindest einen erfassten Vegetationskenngröße auf ein Wachstum von Pflanzen, insbesondere eine Höhe der Pflanzen, die einen Arbeitsprozess, insbesondere einen Mähprozess, erforderlich macht, ist ein Arbeitsprozess zumindest im Wesentlichen automatisch einleitbar. Die Steuer- und/oder Regeleinheit 16 steuert und/oder regelt hierbei die Antriebseinheit 12 und somit die Arbeitsflächenbearbeitungseinheit 32 in Abhängigkeit der zumindest einen erfassten Vegetationskenngröße. Das autonome Fortbewegungsgerät 10 beginnt selbsttätig mit einer Bearbeitung des Arbeitsbereichs bzw. der Arbeitsumgebung und somit einer im Arbeitsbereich bzw. der Arbeitsumgebung befindlichen Arbeitsfläche, insbesondere Grasfläche. Hierbei ist die Steuer- und/oder Regeleinheit 16 dazu vorgesehen, zusätzlich zu der zumindest einen Vegetationskenngröße und/oder der zumindest einen vorausgehenden Energieabgabekenngröße, eine mittels der Standortortungseinheit 34 erfasste Standortortungskenngröße zu einer Steuerung und/oder Regelung der Antriebseinheit 12 auszuwerten.

Das autonome Fortbewegungsgerät 10 umfasst zu einer Erfassung der zumindest einen Vegetationskenngröße zumindest eine Vegetationssensoreinheit 28. Die Vegetationssensoreinheit 28 ist hierbei an oder in der Gehäuseeinheit 36 angeordnet. Die Vegetationssensoreinheit 28 umfasst hierzu zumindest ein Vegetationssensorelement (hier nicht näher dargestellt). Es ist jedoch auch denkbar, dass die Vegetationssensoreinheit 28 eine von eins abweichende Anzahl an Vegetationssensorelementen aufweist. Alternativ oder zusätzlich weist eine Basisstation 22 (Figur 2) eine Vegetationssensoreinheit (hier nicht näher dargestellt) auf, die zu einer Erfassung der zumindest einen Vegetationskenngröße vorgesehen ist. Alternativ ist es auch denkbar, dass eine Vegetationssensoreinheit 20 (in Figur 2 gestrichelt dargestellt) separat zur Basisstation 22 und separat zum autonomen Fortbewegungsgerät 10 ausgebildet ist und zu einer Erfassung der zumindest einen Vegetationskenngröße im Arbeitsbereich bzw. der Arbeitsumgebung angeordnet ist. Zudem ist es denkbar, dass mehr als eine Vegetationssensoreinheit 20 - integriert in die Basisstation 22 oder separat zur Basisstation 22 und separat zum autonomen Fortbewegungsgerät 10 - zu einer Erfassung der zumindest einen Vegetationskenngröße vorgesehen ist, die zu einer Erfassung der zumindest einen Vegetationskenngröße im Arbeitsbereich bzw. der Arbeitsumgebung angeordnet ist. Das autonome Fortbewegungsgerät 10 und die Basisstation 22, die eine externe Einheit bildet, bilden hierbei ein Fortbewegungsgerätesystem. Zudem umfasst das Fortbewegungsgerätesystem zumindest die zumindest eine separat zur Basisstation 22 ausgebildete Vegetationssensoreinheit 20.

Zu einer Kommunikation zumindest des autonomen Fortbewegungsgeräts 10 und der Basisstation 22 umfasst das autonome Fortbewegungsgerät 10 zumindest eine Kommunikationseinheit 18. Die Kommunikationseinheit 18 ist zudem dazu vorgesehen, zu einer Übertragung von elektronischen Daten zumindest von der und/oder zumindest auf die Steuer- und/oder Regeleinheit 16 mit zumindest einer als Vegetationssensoreinheit 20, als Basisstation 22 oder als weiteres autonomes Fortbewegungsgerät 24 (Figur 2), insbesondere als weiterer autonomer Rasenmäher, ausgebildeten externen Einheit zu kommunizieren. Hierbei ist die Kommunikationseinheit 18 zu einer kabellosen Übertragung von elektronischen Daten vorgesehen. Mittels der Kommunikationseinheit 18 sind somit elektronische Daten auf die Steuer- und/oder Regeleinheit 16 übertragbar, die zu einer Steuerung und/oder Regelung der Antriebseinheit 12 und/oder der Arbeitsflächenbearbeitungseinheit 32 von der Steuer- und/oder Regeleinheit 16 verarbeitbar sind.

Bei zumindest einem Verfahrensschritt des Verfahrens zur selbsttätigen Steuerung und/oder Regelung des autonomen Fortbewegungsgeräts 10 erfolgt zu einer dynamischen Einteilung eines Arbeitsbereichs während des Arbeitsprozesses eine Kommunikation zumindest des autonomen Fortbewegungsgeräts 10 mit zumindest einem weiteren autonomen Fortbewegungsgerät 24 mittels der Kommunikationseinheit 18. Es ist jedoch auch denkbar, dass eine unbestimmte Vielzahl an autonomen Fortbewegungsgeräten 10, 24 zu einer dynamischen Einteitung des Arbeitsbereichs miteinander mittels der Kommunikationseinheit 18 kommunizieren. Hat beispielsweise das autonome Fortbewegungsgerät 10 einen Arbeitsprozess in einem ihm zugeteilten Teilabschnitt des Arbeitsbereichs beendet, ist eine Bearbeitung eines dem weiteren autonomen Fortbewegungsgeräts 24 zugeteilten Teilabschnitts des Arbeitsbereichs durch das autonome Fortbewegungsgerät 10 möglich. Weitere, einem Fachmann als sinnvoll erscheinende Möglichkeiten zu einer Nutzung der Kommunikation zwischen den autonomen Fortbewegungsgeräten 10, 24 sind ebenfalls denkbar, wie beispielsweise eine Nutzung des Schwarmverhaltens zu einer Kartographierung des Arbeitsbereichs, Vermessung des Arbeitsbereichs o. dgl. Somit ist das autonome Fortbewegungsgerät 10 dazu vorgesehen, zu einer Kartographierung des Arbeitsbereichs während des Arbeitsprozesses mittels der Kommunikationseinheit 18 mit zumindest dem weiteren autonomen Fortbewegungsgerät 24 zu kommunizieren.

Des Weiteren umfasst das autonome Fortbewegungsgerät 10 zumindest eine manuelle Eingabeeinheit 30 zu einer manuellen Eingabe von zumindest einer Kenngröße, wobei die Steuer- und/oder Regeleinheit 16 dazu vorgesehen ist, die zumindest eine manuelle eingegebene Kenngröße bei einer Steuerung und/oder Regelung der Antriebseinheit 12 in Abhängigkeit von der zumindest einen Vegetationskenngröße und/oder von der zumindest einen vorausgehenden Energieabgabekenngröße zu berücksichtigen. Zudem ist die Steuer- und/oder Regeleinheit 16 dazu vorgesehen, die zumindest eine manuelle eingegebene Kenngröße bei einer Steuerung und/oder Regelung der Arbeitsflächenbearbeitungseinheit 32 in Abhängigkeit von der zumindest einen Vegetationskenngröße und/oder von der zumindest einen vorausgehenden Energieabgabekenngröße zu berücksichtigen. Mittels der manuellen Eingabeeinheit 30 sind beispielsweise Datum, Zeit oder gewünschte Arbeitsprozesses eingebbar. Infolge einer Eingabe eines Datums und/oder einer Uhrzeit ist mittels der Steuer- und/oder Regeleinheit 16 eine Jahreszeit berücksichtigbar. Somit sind auch jahreszeitabhängige Faktoren bei einer Steuerung und/oder Regelung der Antriebseinheit 12 in Abhängigkeit der zumindest einen Vegetationskenngröße berücksichtigbar. Zudem sind mittels einer Eingabe eines Datums und/oder einer Uhrzeit bevorzugte Arbeitstage oder Ruhetage manuell eingebbar, in der kein Arbeitsprozess durchgeführt werden sollen, auch wenn die Steuer- und/oder Regeleinheit 16 gemäß einer Auswertung der zumindest einen Vegetationskenngröße und/oder der zumindest einen Energieabgabekenngröße eine Durchführung für notwendig hält. Es ist zudem auch denkbar, dass weitere Kenngrößen von der Steuer- und/oder Regeleinheit 16 berücksichtigbar sind, wie beispielsweise eine Gewichtung, d.h. eine Einstellung "Häufig mähen" oder "Selten mähen", eine manuelle Eingabe eines Bedienerwunschs, d.h. "jetzt mähen" oder "Mähen abbrechen, da nicht notwendig", eine Mähhöheneinstellung, eine Bodenfeuchte o. dgl. an. Die Gewichtung kann manuell eingestellt oder durch ein automatisches Nutzerverhalten bestimmt oder durch die Steuer- und/oder Regeleinheit 16 nachgeregelt werden. Weitere Eingabemöglichkeiten oder Randbedingungen, die von der Steuer- und/oder Regeleinheit 16 nutzbar sind, sind beispielsweise logische Operationen, die besagen, dass bei Regen das Mähen zeitweilig unterbrochen wird, oder das bei einer Unterschreitung einer Mindestmähhäufigkeit ein Mähprozess eingeleitet wird, obwohl laut errechnetem Arbeitsintervall ein Mähen nicht notwendig ist. Weitere, einem Fachmann als sinnvoll erscheinende logische Operationen, die von der Steuer- und/oder Regeleinheit 16 zu einer Steuerung und/oder Regelung der Antriebseinheit 12 heranziehbar sind, sind ebenfalls denkbar.

Bei einer Steuerung und/oder Regelung der Antriebseinheit 12 zu einer Einleitung eines autonomen Arbeitsprozesses in Abhängigkeit von der zumindest einen vorausgehenden Energieabgabekenngröße wird von der Steuer- und/oder Regeleinheit 16 zumindest eine mittels einer Energieabgabesensoreinheit 40 erfasste vorausgehende Energieabgabekenngröße zu einer Steuerung und/oder Regelung der Antriebseinheit 12 zu einer Einleitung eines autonomen Arbeitsprozesses herangezogen. Die Energieabgabekenngröße kann hierbei als elektrische Stromstärke, als elektrische Leistung o. dgl. ausgebildet sein, mittels derer eine Energieabgabe der Energieversorgungseinheit 14 ermittelbar ist. Besonders bevorzugt ist die Energieabgabekenngröße als abgegebene Stromstärke der Energieversorgungseinheit 14 ausgebildet. Hierbei ist die Energieabgabekenngröße dazu vorgesehen, zu einer Ermöglichung einer Aussage über eine Arbeitsleistung, insbesondere eine Mähleistung, der Antriebseinheit 12 in einem vorausgehenden Arbeitsprozess von der Steuer- und/oder Regeleinheit 16 ausgewertet zu werden. Hierzu ist mittels der Energieabgabesensoreinheit 40, die zumindest ein Energieabgabesensorelement (hier nicht näher dargestellt) umfasst, eine vorausgehende Energieabgabekenngröße der Energieversorgungseinheit 14 erfassbar. Die somit erfasste vorausgehende Energieabgabekenngröße ist repräsentativ für eine Energieabgabe der Energieversorgungseinheit 14 während eines vorausgehenden Arbeitsprozess. Über- oder Unterschreitet die erfasste vorausgehende Energieabgabekenngröße einen Grenzwert, so ist mittels der Steuer- und/oder Regeleinheit 16 auswertbar, ob eine Einleitung eines Arbeitsprozesses notwendig ist oder ob eine Einhaltung einer Ruhezeit sinnvoll ist. Beispielsweise ist es denkbar, dass bei einem vorausgehenden Arbeitsprozess eine erfasste vorausgehende Energieabgabekenngröße größer ist als ein erster Grenzwert, wie beispielsweise eine elektrische Stromstärke mit einem Wert von mehr als 1 A, wodurch mittels der Steuer- und/oder Regeleinheit 16 darauf schließbar ist, dass eine hohe Mähleistung zu einem Mähen der Arbeitsfläche bei einem vorausgehenden Arbeitsprozess notwendig war. Somit schließt die Steuer- und/oder Regeleinheit 16 auf eine hohe Notwendigkeit einer erneuten Bearbeitung der Arbeitsfläche, insbesondere nach einer Durchführung eines Ladeprozesses oder nach einem Ablaufen eines vorbestimmten, insbesondere bei einer Implementierung einer Software vorbestimmten, Zeitintervalls. Der Ladeprozess ist vorzugsweise ebenfalls automatisch mittels der Steuer- und/oder Regeleinheit 16 einleitbar.

Ist eine bei einem vorausgehenden Arbeitsprozess erfasste vorausgehende Energieabgabekenngröße kleiner als ein erster Grenzwert, wie beispielsweise eine elektrische Stromstärke mit einem Wert von weniger als 1 A und mehr als 0,6 A, ist mittels der Steuer- und/oder Regeleinheit 16 darauf schließbar, dass eine geringe Mähleistung zu einem Mähen der Arbeitsfläche bei einem vorausgehenden Arbeitsprozess notwendig war. Somit schließt die Steuer- und/oder Regeleinheit 16 auf eine geringe Notwendigkeit einer erneuten Bearbeitung der Arbeitsfläche und bestimmt ein neues Zeitintervall bis zu einer Einleitung eines Arbeitsprozess. Hierbei ist das neue Zeitintervall größer als das Zeitintervall, das die Steuer- und/oder Regeleinheit 16 bei einer Überschreitung des ersten Grenzwerts zu einer Einleitung eines Arbeitsprozess gewählt hat. Somit ist die Steuer- und/oder Regeleinheit 16 dazu vorgesehen, Ruhezeiten zumindest teilautomatisch in Abhängigkeit von der zumindest einen Vegetationskenngröße und/oder von der zumindest einen vorausgehenden Energieabgabekenngröße zu bestimmen. Zudem ist die Steuer- und/oder Regeleinheit 16 dazu vorgesehen ist, Ruhezeiten zumindest teilautomatisch in Abhängigkeit von zumindest einer in einer Speichereinheit der Steuer- und/oder Regeleinheit 16 hinterlegbaren Kalenderkenngröße zu bestimmen. Ferner ist die Steuer- und/oder Regeleinheit 16 dazu vorgesehen, Arbeitsprozessintervalle zumindest teilautomatisch in Abhängigkeit von der zumindest einen Vegetationskenngröße und/oder von der zumindest einen vorausgehenden Energieabgabekenngröße zu bestimmen. Somit wird in einem Verfahren zu einer selbsttätigen Steuerung und/oder Regelung des autonomen Arbeitsgeräts 10 ein Arbeitsplan des autonomen Fortbewegungsgeräts 10, anhand dessen eine Bearbeitung einer Arbeitsfläche erfolgt, zumindest teilautomatisch in Abhängigkeit von der zumindest einen Vegetationskenngröße und/oder von der zumindest einen bei einem vorausgehenden Arbeitsprozess erfassten Energieabgabekenngröße erstellt.

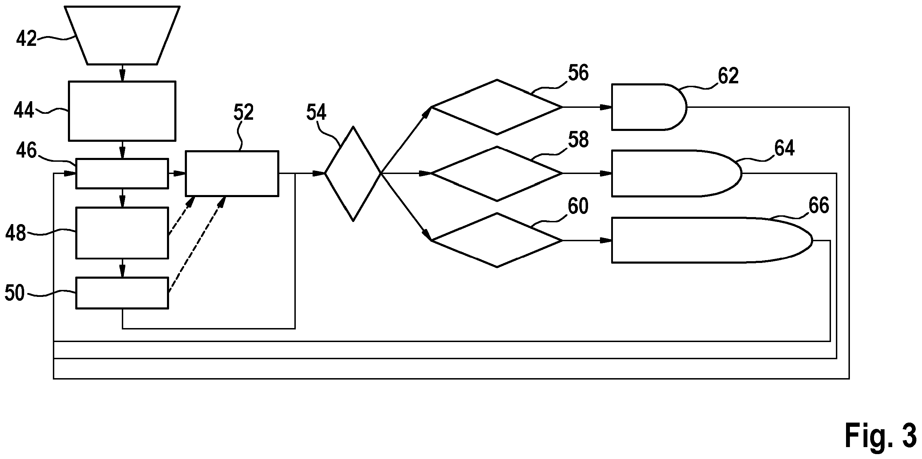

In Figur 3 ist ein schematischer Ablauf einer möglichen Steuerung und/oder Regelung der Antriebseinheit 12 mittels der Steuer- und/oder Regeleinheit 16 in Abhängigkeit von zumindest einer vorausgehenden Energieabgabekenngröße der Energieversorgungseinheit 14 dargestellt. Nach einer Inbetriebnahme und/oder nach einem Anlernprozess des autonomen Fortbewegungsgeräts 10 durch ein Betätigen eines Startbedienelements 42 wird von der Steuer- und/oder Regeleinheit 16 ein Timerelement 44 der Steuer- und/oder Regeleinheit 16 aktiviert. Das Timerelement 44 ist dazu vorgesehen, eine gleichbleibende Startzeit einzuhalten, wie beispielsweise eine Startzeit nach Ablauf eines Countdowns von 24 Stunden. Nach einer Betätigung des Startbedienelements 42 erfolgt ein Arbeitsprozessstart 46, insbesondere ein Mähprozessstart. Hierbei erfolgt eine automatische Bearbeitung der Arbeitsfläche. Wird mittels der Steuer- und/oder Regeleinheit 16 festgestellt, dass die gesamte Arbeitsfläche befahren wurde, wird eine Arbeitsflächenendsignal 48 gesetzt. Hierdurch wird ein Arbeitsprozess beendet 50 und das autonome Fortbewegungsgerät 10 bewegt sich zur Basisstation 22. Während der Durchführung des Arbeitsprozesses erfolgt eine Energieabgabekenngrößenaufzeichnung 52. Aus dieser Energieabgabekenngrößenaufzeichnung 52 wird mittels der Steuer- und/oder Regeleinheit 16 eine durchschnittliche Energieabgabekenngröße 54 errechnet, die repräsentativ ist für den vorausgehenden Arbeitsprozess. Die durchschnittliche Energieabgabekenngröße 54 entspricht somit der vorausgehenden Energieabgabekenngröße, die von der Steuer- und/oder Regeleinheit 16 zu einer Steuerung und/oder Regelung der Antriebseinheit 12 zu einer Einleitung eines Arbeitsprozesses berücksichtigbar ist.

Die Steuer- und/oder Regeleinheit 16 wertet in einem weiteren Verfahrensschritt die durchschnittliche Energieabgabekenngröße 54 aus und vergleicht diese mit Grenzwerten. Bei einer Grenzwertüberschreitung 56 eines ersten Grenzwerts wird eine Notwendigkeit einer erneuten Durchführung eines Arbeitsprozesses mit hoch eingestuft. Hierbei erfolgt eine erneute Durchführung des Arbeitsprozesses nach Ablauf des im Timerelement 44 hinterlegten Zeitintervalls und somit mit einer ersten Startzeitverschiebung 62 von beispielsweise 0 h. Bei einer Grenzwertunterschreitung 58 des ersten Grenzwerts wird eine Notwendigkeit einer erneuten Durchführung eines Arbeitsprozesses mit "mittel" eingestuft. Hierbei erfolgt eine erneute Durchführung des Arbeitsprozesses nach Ablauf des im Timerelement 44 hinterlegten Zeitintervalls zuzüglich einer zweiten Startzeitverschiebung 64 von beispielsweise 24 h. Bei einer Grenzwertüberschreitung 60 eines zweiten Grenzwerts wird eine Notwendigkeit einer erneuten Durchführung eines Arbeitsprozesses mit "niedrig" eingestuft. Hierbei erfolgt eine erneute Durchführung des Arbeitsprozesses nach Ablauf des im Timerelement 44 hinterlegten Zeitintervalls zuzüglich einer dritten Startzeitverschiebung 66 von beispielsweise 48 h.

## Patentansprüche

1. Autonomes Fortbewegungsgerät, insbesondere autonomer Rasenmäher, mit zumindest einer Antriebseinheit (12), mit zumindest einer Energieversorgungseinheit (14) zumindest zu einer Energieversorgung der Antriebseinheit (12), mit zumindest einer Vegetationssensoreinheit (28) zu einer Erfassung zumindest einer Vegetationskenngröße und mit zumindest einer Steuer- und/oder Regeleinheit (16) zumindest zu einer Steuerung und/oder Regelung der Antriebseinheit (12), wobei die Steuer- und/oder Regeleinheit (16) eine Prozessoreinheit, eine Speichereinheit sowie ein in der Speichereinheit gespeicherten Betriebsprogramm umfasst und zumindest dazu vorgesehen ist, zumindest die Antriebseinheit (12) in Abhängigkeit von der zumindest einen Vegetationskenngröße zu einer Einleitung eines autonomen Arbeitsprozesses zu steuern und/oder zu regeln **dadurch gekennzeichnet, dass** in der Speichereinheit eine Vegetationsdatenbank hinterlegt ist, mittels derer in Abhängigkeit der zumindest einen erfassten Vegetationskenngröße auf ein durchschnittliches Wachstum von auf einer Arbeitsfläche befindlichen Pflanzen schließbar ist und/oder das Betriebsprogramm der Steuer- und/oder Regeleinheit (16) zumindest einen Algorithmus umfasst, mittels dessen ein durchschnittliches Wachstum von auf einer Arbeitsfläche befindlichen Pflanzen in Abhängigkeit der zumindest einen erfassten Vegetationskenngröße errechenbar ist.

2. Autonomes Fortbewegungsgerät nach Anspruch 1, **gekennzeichnet durch** zumindest eine Kommunikationseinheit (18), die dazu vorgesehen ist, zu einer Übertragung von elektronischen Daten zumindest von der und/oder zumindest auf die Steuer- und/oder Regeleinheit (16) mit zumindest einer als Vegetationssensoreinheit (20), als Basisstation (22) oder als weiteres autonomes Fortbewegungsgerät (24), insbesondere als weiterer autonomer Rasenmäher, ausgebildeten externen Einheit zu kommunizieren; insbesondere wobei die Vegetationssensoreinheit (28) in das autonome Fortbewegungsgerät integriert ist und/oder das autonome Fortbewegungsgerät zu einer Erfassung von zumindest einer Vegetationskenngröße mittels der Kommunikationseinheit (18) mit einer als Vegetationssensoreinheit (20) ausgebildeten externen Einheit kommuniziert, insbesondere wobei die als Vegetationssensoreinheit (20) ausgebildete externe Einheit in die Basisstation (22) integriert ist.

3. Autonomes Fortbewegungsgerät nach einem der vorhergehenden Ansprüche, **dadurch gekennzeichnet, dass** die Vegetationssensoreinheit (28) zu einer Erfassung von zumindest einer Vegetationskenngröße zumindest ein Vegetationssensorelement aufweist, wobei das Vegetationssensorelement als Tageslichtdauersensorelement, als Helligkeitssensorelement, als Temperatursensorelement, als Regensensorelement, insbesondere als Regenmengensensorelement, oder als Luftfeuchtigkeitssensorelement, insbesondere als Hygrometer, ausgebildet ist.

4. Autonomes Fortbewegungsgerät nach einem der vorhergehenden Ansprüche, **gekennzeichnet durch** zumindest eine manuelle Eingabeeinheit (30) zu einer manuellen Eingabe von zumindest einer Kenngröße, wobei die Steuer- und/oder Regeleinheit (16) dazu vorgesehen ist, die zumindest eine manuelle eingegebene Kenngröße bei einer Steuerung und/oder Regelung der Antriebseinheit (12) in Abhängigkeit von der zumindest einen Vegetationskenngröße und/oder von der zumindest einen vorausgehenden Energieabgabekenngröße zu berücksichtigen.

5. Autonomes Fortbewegungsgerät nach einem der vorhergehenden Ansprüche, **dadurch gekennzeichnet, dass** die Steuer- und/oder Regeleinheit (16) dazu vorgesehen ist, Ruhezeiten zumindest teilautomatisch in Abhängigkeit von der zumindest einen Vegetationskenngröße zu bestimmen.

6. Autonomes Fortbewegungsgerät nach einem der vorhergehenden Ansprüche, **dadurch gekennzeichnet, dass** die Steuer- und/oder Regeleinheit (16) dazu vorgesehen ist, Ruhezeiten zumindest teilautomatisch in Abhängigkeit von zumindest einer in einer Speichereinheit der Steuer- und/oder Regeleinheit (16) hinterlegbaren Kalenderkenngröße zu bestimmen.

7. Autonomes Fortbewegungsgerät nach einem der vorhergehenden Ansprüche, **dadurch gekennzeichnet, dass** die Steuer- und/oder Regeleinheit (16) dazu vorgesehen ist, Arbeitsprozessintervalle zumindest teilautomatisch in Abhängigkeit von der zumindest einen Vegetationskenngröße zu bestimmen.

8. Autonomes Fortbewegungsgerät nach einem der vorhergehenden Ansprüche, **gekennzeichnet durch** zumindest eine Arbeitsflächenbearbeitungseinheit (32), die mittels der Steuer- und/oder Regeleinheit (16) in Abhängigkeit von der zumindest einen Vegetationskenngröße steuer- und/oder regelbar ist.

9. Autonomes Fortbewegungsgerät nach einem der vorhergehenden Ansprüche, **gekennzeichnet durch** zumindest eine Standortortungseinheit (34), wobei die Steuer- und/oder Regeleinheit (16) dazu vorgesehen ist, zusätzlich zu der zumindest einen Vegetationskenngröße, eine mittels der Standortortungseinheit (34) erfasste Standortortungskenngröße zu einer Steuerung und/oder Regelung der Antriebseinheit (12) auszuwerten.

10. Verfahren zu einer selbsttätigen Steuerung und/oder Regelung eines autonomen Fortbewegungsgeräts, insbesondere eines autonomen Rasenmähers, nach einem der vorhergehenden Ansprüche, wobei zu einer Einleitung eines Arbeitsprozesses des autonomen Fortbewegungsgeräts zumindest eine Vegetationskenngröße berücksichtigt wird, mit welcher auf ein durchschnittliches Wachstum von Pflanzen, insbesondere von Gras, geschlossen wird.

11. Verfahren nach Anspruch 10, **dadurch gekennzeichnet, dass** ein Arbeitsplan des autonomen Fortbewegungsgeräts zumindest teilautomatisch in Abhängigkeit von der zumindest einen Vegetationskenngröße erstellt wird.

12. Verfahren nach Anspruch 10 oder 11, **dadurch gekennzeichnet, dass** zumindest das autonome Fortbewegungsgerät zu einer dynamischen Einteilung eines Arbeitsbereichs während des Arbeitsprozesses mittels einer Kommunikationseinheit (18) mit zumindest einem weiteren autonomen Fortbewegungsgerät (24) kommuniziert.

13. Verfahren nach einem der Ansprüche 10 bis 12, **dadurch gekennzeichnet, dass** zumindest das autonome Fortbewegungsgerät zu einer Kartographierung eines Arbeitsbereichs während des Arbeitsprozesses mittels einer Kommunikationseinheit (18) mit zumindest einem weiteren autonomen Fortbewegungsgerät (24) kommuniziert.

14. Fortbewegungsgerätesystem mit zumindest einem autonomen Fortbewegungsgerät nach einem der Ansprüche 1 bis 9 und mit zumindest einer als Basisstation (22) ausgebildeten externen Einheit.

## Claims

1. Autonomous locomotion device, in particular autonomous lawnmower, having at least one drive unit (12), having at least one energy supply unit (14) at least for supplying energy to the drive unit (12), having at least one vegetation sensor unit (28) for capturing at least one vegetation characteristic variable, and having at least one open-loop and/or closed-loop control unit (16) at least for open-loop and/or closed-loop control of the drive unit (12), wherein the open-loop and/or closed-loop control unit (16) comprises a processor unit, a memory unit and an operating program stored in the memory unit and is provided at least for the purpose of controlling at least the drive unit (12) in an open-loop and/or closed-loop manner to initiate an autonomous working process on the basis of the at least one vegetation characteristic variable, **characterized in that** a vegetation database is stored in the memory unit and can be used to infer an average growth of plants in a working area on the basis of the at least one captured vegetation characteristic variable, and/or the operating program of the open-loop and/or closed-loop control unit (16) comprises at least one algorithm which can be used to calculate an average growth of plants in a working area on the basis of the at least one captured vegetation characteristic variable.

2. Autonomous locomotion device according to Claim 1, **characterized by** at least one communication unit (18) which is provided for the purpose of communicating with at least one external unit in the form of a vegetation sensor unit (20), a base station (22) or a further autonomous locomotion device (24), in particular a further autonomous lawnmower, for the purpose of transmitting electronic data at least from and/or at least to the open-loop and/or closed-loop control unit (16); in particular wherein the vegetation sensor unit (28) is integrated in the autonomous locomotion device and/or the autonomous locomotion device communicates with an external unit in the form of a vegetation sensor unit (20) by means of the communication unit (18) for the purpose of capturing at least one vegetation characteristic variable, in particular wherein the external unit in the form of a vegetation sensor unit (20) is integrated in the base station (22).

3. Autonomous locomotion device according to one of the preceding claims, **characterized in that** the vegetation sensor unit (28) has at least one vegetation sensor element for the purpose of capturing at least one vegetation characteristic variable, wherein the vegetation sensor element is in the form of a daylight period sensor element, a brightness sensor element, a temperature sensor element, a rain sensor element, in particular a rain quantity sensor element, or a humidity sensor element, in particular a hygrometer.

4. Autonomous locomotion device according to one of the preceding claims, **characterized by** at least one manual input unit (30) for manually inputting at least one characteristic variable, wherein the open-loop and/or closed-loop control unit (16) is provided for the purpose of taking into account the at least one manual input characteristic variable when controlling the drive unit (12) in an open-loop and/or closed-loop manner on the basis of the at least one vegetation characteristic variable and/or the at least one preceding energy output characteristic variable.

5. Autonomous locomotion device according to one of the preceding claims, **characterized in that** the open-loop and/or closed-loop control unit (16) is provided for the purpose of determining idle times at least partially automatically on the basis of the at least one vegetation characteristic variable.

6. Autonomous locomotion device according to one of the preceding claims, **characterized in that** the open-loop and/or closed-loop control unit (16) is provided for the purpose of determining idle times at least partially automatically on the basis of at least one calendar characteristic variable that can be stored in a memory unit of the open-loop and/or closed-loop control unit (16).

7. Autonomous locomotion device according to one of the preceding claims, **characterized in that** the open-loop and/or closed-loop control unit (16) is provided for the purpose of determining working process intervals at least partially automatically on the basis of the at least one vegetation characteristic variable.

8. Autonomous locomotion device according to one of the preceding claims, **characterized by** at least one working area treatment unit (32) which can be controlled in an open-loop and/or closed-loop manner by means of the open-loop and/or closed-loop control unit (16) on the basis of the at least one vegetation characteristic variable.

9. Autonomous locomotion device according to one of the preceding claims, **characterized by** at least one position-finding unit (34), wherein the open-loop and/or closed-loop control unit (16) is provided for the purpose of evaluating, in addition to the at least one vegetation characteristic variable, a position-finding characteristic variable captured by means of the position-finding unit (34) for the purpose of controlling the drive unit (12) in an open-loop and/or closed-loop manner.

10. Method for automatically controlling an autonomous locomotion device, in particular an autonomous lawnmower, according to one of the preceding claims in an open-loop and/or closed-loop manner, wherein, in order to initiate a working process of the autonomous locomotion device, at least one vegetation characteristic variable that is used to infer an average growth of plants, in particular grass, is taken into account.

11. Method according to Claim 10, **characterized in that** a working plan of the autonomous locomotion device is created at least partially automatically on the basis of the at least one vegetation characteristic variable.

12. Method according to Claim 10 or 11, **characterized in that** at least the autonomous locomotion device communicates with at least one further autonomous locomotion device (24) by means of a communication unit (18) for the purpose of dynamically dividing a working region during the working process.

13. Method according to one of Claims 10 to 12, **characterized in that** at least the autonomous locomotion device communicates with at least one further autonomous locomotion device (24) by means of a communication unit (18) for the purpose of mapping a working region during the working process.

14. Locomotion device system having at least one autonomous locomotion device according to one of Claims 1 to 9 and having at least one external unit in the form of a base station (22).

## Revendications

1. Appareil à déplacement autonome, notamment tondeuse à gazon autonome, comprenant au moins une unité d'entraînement (12), au moins une unité d'alimentation en énergie (14) destinée au moins à alimenter l'unité d'entraînement (12) en énergie, au moins une unité de détection de végétation (28) destinée à détecter au moins un paramètre de végétation et au moins une unité de commande et/ou de régulation (16) destinée au moins à commander et/ou réguler l'unité d'entraînement (12), l'unité de commande et/ou de régulation (16) comprenant une unité formant processeur, une unité formant mémoire et un programme d'exploitation mémorisé dans l'unité formant mémoire et étant au moins prévue pour commander et/ou réguler au moins l'unité d'entraînement (12) pour lancer un processus de travail autonome en fonction de l'au moins un paramètre de végétation, **caractérisé en ce qu'**une base de données de végétation est stockée dans l'unité de stockage et permet de déduire la croissance moyenne des plantes situées sur une surface de travail en fonction de l'au moins un paramètre de végétation détecté et/ou le programme d'exploitation de l'unité de commande et/ou de régulation (16) comprend au moins un algorithme qui permet de calculer une croissance moyenne des plantes situées sur une surface de travail en fonction de l'au moins un paramètre de végétation détecté.

2. Appareil à déplacement autonome selon la revendication 1, **caractérisé par** au moins une unité de communication (18) qui est prévue pour communiquer avec au moins une unité extérieure conçue comme une unité de détection de végétation (20), une station de base (22) ou un autre appareil à déplacement autonome (24), en particulier une autre tondeuse à gazon autonome afin de transmettre des données électroniques au moins depuis et/ou au moins vers l'unité de commande et/ou de régulation (16) ; en particulier l'unité de détection de végétation (28) étant intégrée dans l'appareil à déplacement autonome et/ou l'appareil à déplacement autonome communiquant avec une unité extérieure conçue comme une unité de détection de végétation (20) au moyen de l'unité de communication (18) afin de détecter au moins un paramètre de végétation, notamment l'unité extérieure conçue comme une unité de détection de végétation (20) étant intégrée dans la station de base (22) .

3. Appareil à déplacement autonome selon l'une des revendications précédentes, **caractérisé en ce que** l'unité de détection de végétation (28) comporte au moins un élément de détection de végétation destiné à détecter au moins un paramètre de végétation, l'élément de détection de végétation étant conçu comme un élément de détection de durée de lumière du jour, un élément de détection de luminosité, un élément de détection de température, un élément de détection de pluie, en particulier un élément de détection de quantité de pluie, ou un élément de détection d'humidité de l'air, notamment comme un hygromètre.

4. Appareil à déplacement autonome selon l'une des revendications précédentes, **caractérisé par** au moins une unité d'entrée manuelle (30) destinée à entrer manuellement au moins un paramètre, l'unité de commande et/ou de régulation (16) étant prévue pour prendre en compte l'au moins un paramètre entré manuellement lors d'une commande et/ou d'une régulation de l'unité d'entraînement (12) en fonction de l'au moins un paramètre de végétation et/ou de l'au moins un paramètre de production d'énergie précédent.

5. Appareil à déplacement autonome selon l'une des revendications précédentes, **caractérisé en ce que** l'unité de commande et/ou de régulation (16) est prévue pour déterminer des temps de repos de manière au moins partiellement automatique en fonction de l'au moins un paramètre de végétation.

6. Appareil à déplacement autonome selon l'une des revendications précédentes, **caractérisé en ce que** l'unité de commande et/ou de régulation (16) est prévue pour déterminer des temps de repos de manière au moins partiellement automatique en fonction d'au moins un paramètre de calendrier stocké dans une unité formant mémoire de l'unité de commande et/ou de régulation (16) .

7. Appareil à déplacement autonome selon l'une des revendications précédentes, **caractérisé en ce que** l'unité de commande et/ou de régulation (16) est prévue pour déterminer des intervalles de processus de travail de manière au moins partiellement automatique en fonction de l'au moins un paramètre de végétation.

8. Appareil à déplacement autonome selon l'une des revendications précédentes, **caractérisé par** au moins une unité de traitement de surface de travail (32) qui peut être commandée et/ou régulée au moyen de l'unité de commande et/ou de régulation (16) en fonction de l'au moins un paramètre de végétation.

9. Appareil à déplacement autonome selon l'une des revendications précédentes, **caractérisé par** au moins une unité de localisation d'emplacement (34), l'unité de commande et/ou de régulation (16) étant prévue pour évaluer, en plus de l'au moins un paramètre de végétation, un paramètre de localisation d'emplacement détecté par l'unité de localisation d'emplacement (34) afin de commander et/ou réguler l'unité d'entraînement (12) .

10. Procédé de commande et/ou de régulation automatique d'un appareil à déplacement autonome, notamment une tondeuse à gazon autonome, selon l'une des revendications précédentes, au moins un paramètre de végétation, qui permet de déduire une croissance moyenne de plantes, en particulier d'herbe, étant pris en compte pour lancer un processus de travail de l'appareil à déplacement autonome.

11. Procédé selon la revendication 10, **caractérisé en ce qu'**un plan de travail de l'appareil à déplacement autonome est créé de manière au moins partiellement automatique en fonction de l'au moins un paramètre de végétation.

12. Procédé selon la revendication 10 ou 11, **caractérisé en ce qu'**au moins l'appareil à déplacement autonome communique avec au moins un autre appareil à déplacement autonome (24) au moyen d'une unité de communication (18) pour effectuer une division dynamique d'une zone de travail pendant le processus de travail.

13. Procédé selon l'une des revendications 10 à 12, **caractérisé en ce qu'**au moins l'appareil à déplacement autonome communique avec au moins un autre appareil à déplacement autonome (24) au moyen d'une unité de communication (18) pour cartographier une zone de travail pendant le processus de travail.

14. Système d'appareils à déplacement comportant au moins un appareil à déplacement autonome selon l'une des revendications 1 à 9 et comportant au moins une unité extérieure conçue comme une station de base (22).
